(19) Europäisches Patentamt
European Patent Office
Office européen des brevets

(11) **EP 1 664 735 B1**

(12) **FASCICULE DE BREVET EUROPEEN**

(45) Date de publication et mention de la délivrance du brevet:
**07.06.2017 Bulletin 2017/23**

(21) Numéro de dépôt: **04787318.7**

(22) Date de dépôt: **07.09.2004**

(51) Int Cl.:
***G01N 15/02*** *(2006.01)*    *G01N 21/53* *(2006.01)*

(86) Numéro de dépôt international:
**PCT/FR2004/002263**

(87) Numéro de publication internationale:
**WO 2005/026700 (24.03.2005 Gazette 2005/12)**

(54) **MESURE EN LIGNE DES CARACTERISTIQUES D'UN SYSTÈME DISPERSE S'ECOULANT**

ONLINE-MESSUNG CHARAKTERISTISCHER MERKMALE EINES DURCHFLUSS-DISPERSIONSSYSTEMS

SEQUENTIAL MEASUREMENT OF FLOW DISPERSED SYSTEM CHARACTERISTICS

(84) Etats contractants désignés:
**AT BE BG CH CY CZ DE DK EE ES FI FR GB GR HU IE IT LI LU MC NL PL PT RO SE SI SK TR**

(30) Priorité: **08.09.2003 FR 0310558**

(43) Date de publication de la demande:
**07.06.2006 Bulletin 2006/23**

(73) Titulaires:
• **UNIVERSITE DE NANTES**
  **44035 Nantes (FR)**
• **Université Paul Sabatier**
  **31062 Toulouse 4 (FR)**
• **Centre National de la Recherche Scientifique (C.N.R.S.)**
  **75794 Paris Cedex 16 (FR)**

(72) Inventeurs:
• **ARHALIASS, Abdellah**
  **F-44600 Saint-Nazaire (FR)**

• **BELHABRI, Monia**
  **F-44600 Saint-Nazaire (FR)**
• **LE SAUZE, Nathalie**
  **F-31240 L'Union (FR)**
• **LEGRAND, Jack**
  **F-44600 Saint-Nazaire (FR)**

(74) Mandataire: **Laget, Jean-Loup**
  **Ipsilon**
  **Le Centralis**
  **63, avenue du Général Leclerc**
  **92340 Bourg-la-Reine (FR)**

(56) Documents cités:
**EP-A- 1 277 505      DE-A- 10 001 701**
**DE-A- 19 910 698     GB-A- 2 141 553**
**US-A- 5 012 119       US-A- 5 627 642**
**US-A- 5 973 779       US-A1- 2002 166 391**

**Description**

La présente invention concerne un procédé et un dispositif de mesure en ligne des caractéristiques d'un système dispersé liquide-liquide, tel qu'une émulsion, ou liquide-solide, tel qu'une suspension, contenu dans une installation principale, telle qu'une cuve de mélange ou un circuit de circulation, du système dispersé à caractériser.

Elle concerne plus particulièrement un dispositif du type constitué d'un circuit apte à être monté en ligne ou en dérivation sur l'installation principale, ce circuit de dérivation alimentant, à un débit prédéterminé, au moins une chambre de mesure en vue de permettre des mesures en écoulement, ce circuit comportant des son voisinage au moins des moyens d'émission d'un faisceau laser collimaté frappant en incidence normale la chambre de mesure.

Les caractérisations des dispersions liquides concentrées à l'état natif en terme de répartition de tailles des gouttelettes de phase interne constituent un outil clé pour l'optimisation et le développement de nouveaux produits. Les techniques de caractérisations granulométriques de particules solides se sont développées considérablement ces dernières années et offrent maintenant des possibilités de balayage d'une large gamme de tailles allant du domaine de quelques millimètres jusqu'au domaine du submicronique. Parmi ces techniques, il peut être cité la microscopie optique utilisée dans une gamme de 1 à 150 microns et la microscopie électronique pour la gamme des tailles inférieures au micron. Les méthodes séparatives, sédimentation ou centrifugation, couplées à des compteurs de particules par variation d'impédance sont aussi très utilisées. Plus récemment, on a assisté au développement de la granulométrie par diffraction ou diffusion laser. La granulométrie laser consiste en la déviation de la lumière de son axe principal par les particules éclairées par une source laser. La quantité de lumière déviée et l'importance de l'angle de déviation permettent de mesurer la taille de la particule en analysant l'intensité reçue aux différents angles. Cette technique fait l'hypothèse d'une particule sphérique ou plate, complètement opaque, et considère que la lumière est diffractée par une particule quelle que soit sa taille avec la même efficacité. Enfin, les méthodes basées sur la spectroscopie à corrélation de photons relient l'intensité de la lumière diffusée par une particule soumise à la diffusion brownienne à la taille de la particule.

Cependant, toutes les techniques classiques de diffusion de la lumière pour la caractérisation des dispersions liquides nécessitent une dilution de l'échantillon et sont basées sur la diffusion simple de la lumière. Cette dilution peut poser des problèmes de modification de la nature et de la composition de la dispersion. En conséquence, les méthodes mentionnées ci-dessus ne sont applicables qu'à des systèmes dilués.

Parallèlement, des méthodes endoscopiques sont également utilisées et peuvent caractériser des milieux allant jusqu'à une concentration de 50 % en phase dispersée. Toutefois, ces méthodes sont intrusives et nécessitent souvent une calibration préalable.

Plusieurs documents enseignent l'utilisation des techniques de diffusion sans dilution de l'échantillon. Pour se faire, ces documents suggèrent l'utilisation de la composante rétro diffusée du signal lumineux.

Parmi ces documents, le brevet US 5, 012, 119 décrit un dispositif dont le but est de déterminer, à partir d'un échantillon prélevé dans une cuve où a lieu une réaction chimique, la pureté du bain en distinguant et en quantifiant les particules et les bulles contenues dans le bain. Les résultats quantitatifs sont obtenus par comparaison avec les résultats obtenus à partir d'échantillons étalons. Outre le fait que les mesures s'effectuent dans une chambre de prélèvement non soumise à une circulation permanente, on constate que les moyens mis en oeuvre ne permettent pas de déterminer la répartition ou la distribution des tailles des particules, donnée qui fait jusqu'à présent défaut lorsque les mesures sont effectuées avec des dispositifs de mesure traditionnels.

Le document allemand DE 100 01 701 décrit un dispositif, proche de celui de l'invention, dont le but est de déterminer la taille moyenne des particules en suspension ou en dilution dans un bain. Ce document enseigne qu'il est plus judicieux d'étudier la composante rétro diffusée du signal lumineux ou sa composante transmise selon que la taille supposée des particules-contenues dans le bain est plus ou moins grande. La valeur de la taille moyenne des particules contenues dans le bain est obtenue par comparaison avec des valeurs issues de calibrations. Ce document enseigne de façon originale que l'échantillon sur lequel la mesure est pratiquée s'écoule dans la chambre de mesure. Toutefois, à nouveau, les mesures pratiquées, qui n'ont notamment pas pour objet de déterminer en temps réel la concentration des particules en parallèle de l'évolution de l'intensité lumineuse du signal rétrodiffusé, ne permettent pas d'obtenir sous forme d'un spectre la répartition ou distribution de taille des particules diffusantes. En effet, la valeur retenue est toujours une valeur moyenne de taille et non une grandeur individuelle qui permet une répartition spectrale. En outre, la mesure ne s'applique qu'à des échantillons ayant une concentration en particules comprise entre 0,1 et 20 % en volume.

Le document DE 19910698 décrit à nouveau un dispositif pour déterminer les caractéristiques des particules d'un échantillon de volume donné. La mesure effectuée ne permet pas de déterminer la valeur de la concentration en particules diffusante de l'échantillon.

Un but de la présente invention est donc de proposer un procédé et un dispositif permettant la mesure en ligne de la distribution de taille de milieux liquide/liquide, solide/liquide en écoulement sans calibration préalable, sans dilution, ni autre dénaturation du produit, quelle que soit la concentration, pour mesurer l'état réel de la dispersion du système concentré.

Un autre but de la présente invention est de proposer un procédé et un dispositif du type précité applicable à une large gamme de concentrations en phase dispersée sans nécessiter de prélèvement et de dilution des milieux à analyser.

A cet effet, l'invention a pour objet un dispositif de mesure en ligne des caractéristiques d'un système dispersé liquide-liquide, tel qu'une émulsion, ou liquide-solide, tel qu'une suspension, contenu dans une installation principale, telle qu'une cuve de mélange ou un circuit de circulation du système dispersé à caractériser, ce dispositif étant constitué d'un circuit apte à être monté en ligne ou en dérivation sur l'installation principale, ce circuit alimentant, à un débit prédéterminé, au moins une chambre de mesure en vue de permettre une mesure en écoulement, ce circuit comportant dans son voisinage au moins des moyens d'émission d'un faisceau laser collimaté frappant en incidence normale la chambre de mesure, des moyens, de type photodiodes, pour la mesure, en temps réel, du signal lumineux rétro diffusé par l'échantillon de système dispersé s'écoulant, au cours de la mesure, dans le circuit, et de conversion de ce signal en un signal électrique, caractérisé en ce que le dispositif comporte, des moyens de mesure en ligne, en temps réel, sans prélèvement et sans calibration, de la concentration en particules diffusantes de l'échantillon de système dispersé en écoulement dans le circuit et des moyens d'acquisition et de traitement de données, les moyens de mesure en ligne de la concentration et les moyens de mesure du signal lumineux rétrodiffusé transmettant en parallèle leurs données auxdits moyens d'acquisition, lesdits moyens d'acquisition, étant agencés pour déterminer, à partir des fluctuations dans le temps de l'intensité lumineuse rétrodiffusée par le système dispersé en écoulement dans le circuit et de la concentration en particules diffusantes du système dispersé en écoulement dans le circuit, la distribution ou la répartition de tailles des particules diffusantes dans le système dispersé, quelle que soit la concentration en particules de ce dernier.

Le dispositif, adaptable aussi bien aux systèmes dilués qu'aux milieux plus concentrés, consiste donc à éclairer une dispersion en écoulement homogène avec une source laser et à étudier les fluctuations spatio-temporelles du signal rétrodiffusé parallèlement à la mesure de la concentration. Grâce à un traitement mathématique approprié, on peut ainsi relier en ligne et en temps réel la fonction de corrélation temporelle de la lumière rétrodiffusée par un milieu dispersé, dilué ou concentré à la distribution de taille des particules diffusantes. Cette relation est établie connaissant les propriétés optiques du milieu dispersé à étudier ainsi que la concentration et le gradient de vitesse ou débit auquel est soumise la dispersion.

L'invention a encore pour objet un procédé de mesure en ligne des caractéristiques d'un système dispersé liquide-liquide, tel qu'une émulsion, ou liquide-solide, tel qu'une suspension, contenu dans une installation principale, telle qu'une cuve de mélange ou un circuit de circulation du système dispersé à caractériser, au moyen d'un dispositif du type constitué d'un circuit apte à être monté en ligne ou en dérivation sur l'installation principale, ce circuit alimentant à un débit prédéterminé au moins une chambre de mesure en vue de permettre une mesure en écoulement, cette chambre de mesure étant frappée en incidence normale par un faisceau laser collimaté, caractérisé en ce qu'il consiste à mesurer, en ligne, en temps réel et en parallèle, d'une part la concentration en particules diffusantes de l'échantillon de système dispersé circulant dans le circuit, d'autre part le signal lumineux rétrodiffusé par l'échantillon de système dispersé circulant dans ledit circuit et à convertir ce signal en un signal électrique, à acquérir ces données mesurées suivant une fréquence d'échantillonnage déterminée fonction de l'ordre de grandeur de la taille moyenne des particules diffusantes du système dispersé à caractériser, puis à traiter lesdites données en vue de déterminer, à partir des fluctuations dans le temps de l'intensité lumineuse rétrodiffusée par le système dispersé en écoulement dans le circuit et de la concentration en particules diffusantes du système dispersé en écoulement dans le circuit, la distribution ou répartition de taille des particules diffusantes dans le système dispersé, quelle que soit la concentration de ce dernier.

L'invention sera bien comprise à la lecture de la description suivante d'exemples de réalisation, en référence aux dessins annexés dans lesquels :

la figure 1 représente, de manière schématique, une vue partielle d'un dispositif conforme à l'invention illustrant un premier mode de réalisation des moyens de mesure de la concentration ;

la figure 2 représente l'implantation de ce dispositif sur une installation principale du type constitué d'une cuve de mélange d'un système dispersé ;

la figure 3 représente de manière schématique une vue partielle d'un dispositif conforme à l'invention illustrant une variante de réalisation des moyens de mesure de la concentration,

la figure 4 représente la distribution de tailles des particules diffusantes dans le système dispersé en fonction de l'intensité rétrodiffusée, et

la figure 5 représente, de manière schématique sous forme d'un algorithme simplifié, les étapes de traitement mathématique des données mesurées à l'aide du dispositif, objet de l'invention.

Comme mentionné ci-dessus, le dispositif de mesure, objet de l'invention, est plus particulièrement destiné à

3

la mesure en ligne des caractéristiques d'un système dispersé liquide-liquide, tel qu'une émulsion, ou liquide-solide, tel qu'une suspension, contenu dans une installation 1 principale, telle qu'une cuve de mélange ou un circuit de circulation du système dispersé à caractériser. La concentration en particules du système dispersé à caractériser est quelconque. Le dispositif peut donc s'appliquer aussi bien à des milieux dilués qu'à des milieux concentrés pouvant atteindre des concentrations voisines de 80 %.

Ce contrôle en ligne de la répartition granulométrique des émulsions et des dispersions liquides concentrées est fondamental pour l'optimisation et le développement de nouveaux produits et de nouveaux procédés.

Ce dispositif est constitué d'un circuit 3 apte à être monté en ligne ou en dérivation sur l'installation principale. Dans les exemples représentés, ce dispositif est constitué d'un circuit 3 monté en dérivation sur une cuve 1 de mélange équipée de moyens 2 d'agitation du contenu de la cuve entraînés en rotation par un moteur 2A. Toutefois, des résultats similaires pourraient être obtenus avec un circuit 3 monté en ligne sur un circuit principal de circulation du système dispersé. En conséquence, tout ce qui est décrit ci-après pour un circuit 3 de dérivation s'applique de manière analogue à un circuit 3 en ligne. Ce circuit 3 alimente, à un débit prédéterminé, au moins une chambre 4 de mesure en vue de permettre des mesures en écoulement à l'intérieur de la chambre 4 de mesure. Pour permettre cette alimentation à un débit prédéterminé de la ou des chambres de mesure, le circuit 3 est équipé d'au moins une pompe 14, telle qu'une pompe péristaltique, disposée exclusivement en aval de la chambre 4 de mesure du circuit 3. Dans le cas où le circuit est installé sur un circuit principal de circulation du système dispersé à caractériser, il comporte alors, en amont de la chambre 4 de mesure, au moins un débitmètre et une vanne de régulation de débit commandée en ouverture/fermeture à partir des informations fournies par le débitmètre de manière à garantir une alimentation en système dispersé de la chambre de mesure à un débit constant. La chambre 4 de mesure constitue toujours une zone de transit de l'échantillon de système dispersé à mesurer, cet échantillon provenant de l'installation principale et retournant à ladite installation.

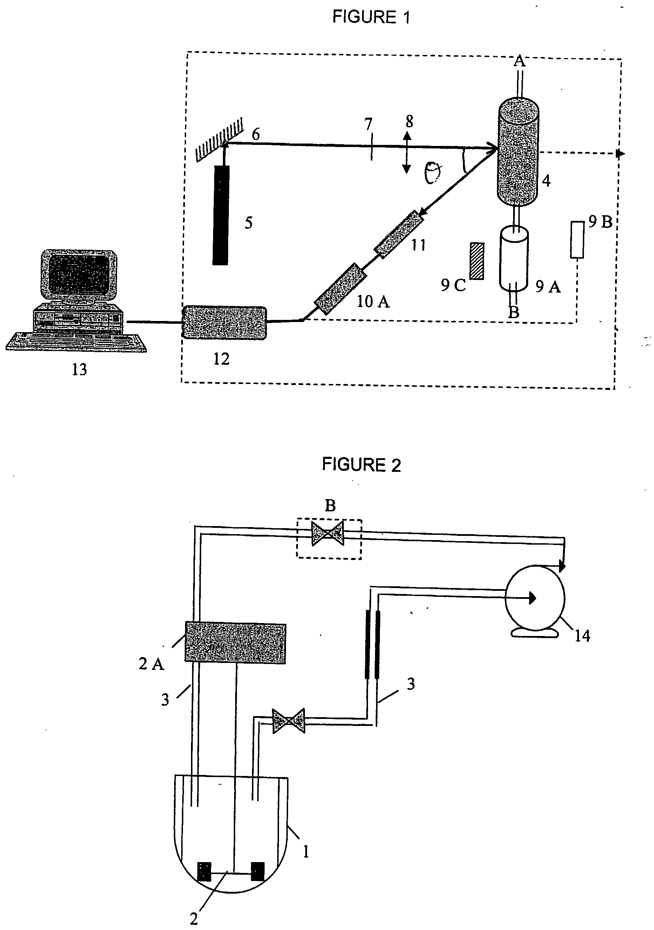

Ce circuit 3 comporte, dans son voisinage, au moins des moyens d'émission d'un faisceau laser collimaté frappant en incidence normale la chambre 4 de mesure. Ainsi, dans les exemples représentés, la chambre 4 de mesure peut être constituée d'un tube en verre de diamètre intérieur 8 mm. Le laser 5 est quant à lui un laser He-Ne (ou autre) de longueur d'onde A = 632,8 nm. Le rayonnement laser arrive en incidence normale sur la cellule 4 de mesure après avoir frappé un miroir 6 puis être passé à travers un diaphragme 7 de diamètre par exemple égal à 2 mm puis à travers une lentille 8 convergente permettant d'obtenir un faisceau collimaté convergent sur la chambre 4 de mesure. Le dispositif comporte en outre des moyens de type photodiode 10A de mesure en temps réel du signal lumineux rétrodiffusé par l'échantillon de système dispersé circulant dans le circuit 3 de dérivation et de conversion de ce signal en un signal électrique. Ainsi, dans l'exemple représenté à la figure 1, le flux lumineux rétrodiffusé est capté par une photodiode 10A via une fibre optique 11 de diamètre au coeur de 50 $\mu$m. Ce signal converti en un signal électrique est ensuite amplifié par un amplificateur 12. Pour obtenir une mesure optimale analysable, les moyens de type photodiodes 10A sont agencés pour mesurer le signal issu du faisceau lumineux rétrodiffusé dont l'axe forme avec l'axe du faisceau des moyens 5, 6, 7, 8 d'émission incident frappant la chambre 4 de mesure, en angle $\theta$ compris dans la plage [5° - 45°], de préférence [5° - 10°].

Lorsque l'angle $\theta$ est inférieur à 5° et que les moyens de mesure sont positionnés sur le faisceau de lumière incident, le régime est dit de diffusion dépendante. Il n'y a pas à ce jour de théorie permettant, à partir d'un tel signal, de déduire la concentration et la taille des particules.

le signal obtenu est trop dense pour pouvoir être analysé et permettre notamment l'obtention d'une valeur de concentration.

Les données mesurées sont alors transmises à des moyens d'acquisition et de traitement de données aptes à permettre l'acquisition des fluctuations dans le temps de l'intensité lumineuse rétrodiffusée par le système dispersé. Pour permettre l'acquisition des données, une carte d'acquisition intégrée à un ordinateur 13 permet de gérer l'acquisition des données aux fréquences souhaitées et de les stocker dans une mémoire afin de les traiter immédiatement ou ultérieurement. Le logiciel d'acquisition utilisé, par exemple le logiciel Picoscope (marque déposée), (de Pico technologies), permet une visualisation en temps réel du signal acquis et présente l'avantage, grâce à un affichage semblable à celui d'un oscilloscope de contrôler toute anomalie au cours de l'acquisition. Les moyens d'acquisition de données présentent une fréquence d'acquisition réglable sélectionnée par l'opérateur en fonction de l'ordre de grandeur de la taille des particules diffusantes du système dispersé à caractériser, la valeur de la fréquence choisie étant transmise aux moyens de traitement déterminant, à partir de ladite valeur, les valeurs de paramètres tels que le coefficient d'anisotropie et l'efficacité de diffusion correspondant aux propriétés optiques des particules diffusantes du système dispersé à caractériser. La valeur est choisie par l'opérateur en fonction de l'ordre de grandeur de la taille des particules du système à caractériser. En effet, il existe deux cas de diffusion à savoir les particules diffusantes de type "Mie" de taille caractéristique très grande devant la longueur d'onde de la lumière incidente et les particules diffusantes de type "Rayleigh" qui sont des particules de taille caractéristique très faible devant la longueur d'onde incidente. Ainsi, plus les particules sont grandes, plus la fréquence d'échantillonnage est choisie basse. En fonction du type de particules, il devient aisé de déterminer les propriétés de diffusion et d'absorption de la lumière par les particules à analyser.

Ce dispositif comporte en outre des moyens de mesure en ligne de la concentration en particules diffusantes de l'échantillon de système dispersé circulant dans le circuit 3 en ligne ou de dérivation. Deux modes de réalisation de ces moyens de mesure peuvent être envisagés. Ainsi, comme l'illustre la figure 1, ces moyens de mesure en temps réel de la concentration en particules diffusantes de l'échantillon du système dispersé circulant dans le circuit peuvent être constitués d'une chambre 9A ménagée sur le circuit 3, d'une source 9C de radiation lumineuse disposée à l'extérieur de la chambre 9A de manière à émettre une radiation lumineuse traversant la chambre 9A et des moyens 9B de détection de la radiation lumineuse diffusée à travers ladite chambre 9A. Les moyens 9B de détection de la radiation lumineuse, résultant de la radiation lumineuse émise par la source 9C lumineuse et traversant la chambre 9A de mesure, peuvent être constitués d'un collecteur de radiation lumineuse formé d'une fenêtre optique à travers laquelle les radiations sont amenées par l'intermédiaire d'au moins une fibre optique à un détecteur linéaire ou matriciel type CCD équipé de moyens de filtrage ou à un photo détecteur. La source 9C lumineuse peut être une diode laser ou une diode électroluminescente ou être constituée par la même source que celle qui frappe la chambre de mesure principale. Dans ce cas, la mesure de la concentration repose sur la lumière diffusée à travers ladite chambre de mesure et la loi de Beer Lambert peut être appliquée pour déterminer, à partir de la mesure de la densité optique, la concentration en particules diffusantes de l'échantillon du système à caractériser.

Il est à noter que les éléments représentés dans le carré en pointillé à la figure 1 peuvent être insérés à l'intérieur d'une enceinte raccordable par les points A et B au circuit 3 représenté à la figure 2 en un emplacement correspondant à celui représenté sous forme d'un carré en pointillé.

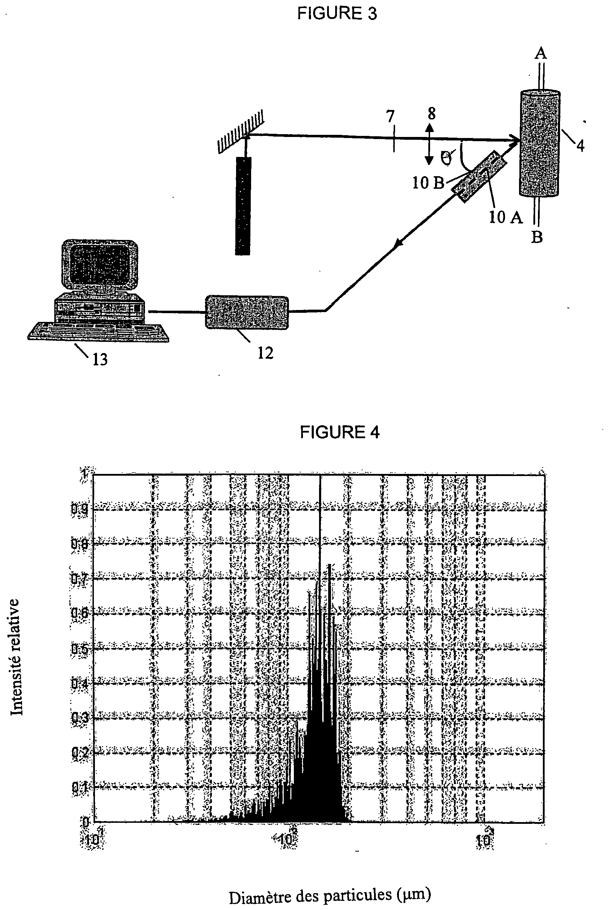

Dans un autre mode de réalisation représenté à la figure 3, les moyens de mesure en temps réel de la concentration sont constitués par l'une 10B des photodiodes 10A, 10B de la barrette de photodiodes positionnée à l'extérieur de la chambre 4 de mesure du circuit de dérivation, de préférence au voisinage du point d'impact du faisceau laser sur ladite chambre 4. Cette photodiode détecte la zone centrale du flux lumineux rétrodiffusé dont l'intensité est directement fonction de la concentration en parties diffusantes. En effet, dans la zone centrale de la tache de rétro-diffusion et sous une détection de faible angle (inférieur à 5°), la mesure dépend uniquement de la concentration en particules diffusantes.

A partir de ce signal, il est possible de déterminer, par l'intermédiaire des moyens d'acquisition et de traitement de données décrits ci-dessus, la concentration en particules diffusantes de l'échantillon de système dispersé à caractériser.

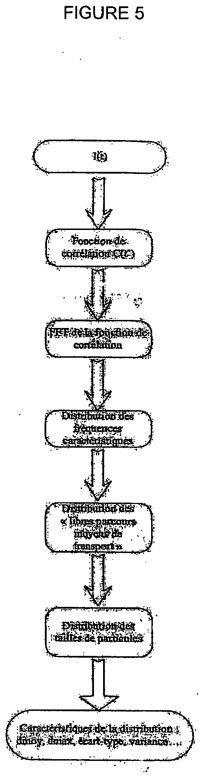

Comme mentionné ci-dessus, les moyens d'acquisition de données présentent une fréquence d'acquisition réglable sélectionnée par l'opérateur en fonction de l'ordre de grandeur de la taille des particules diffusantes. Ainsi, ces moyens de traitement sont agencés pour permettre, à partir du traitement de la courbe I(t) correspondant aux fluctuations de l'intensité lumineuse rétrodiffusée par le milieu dispersé à caractériser en fonction du temps et de la valeur de la concentration en particules diffusantes du système dispersé à caractériser, le calcul de la fonction d'auto-corrélation temporelle C'(t), la transformée de Fourier inverse de cette fonction permettant de déterminer une distribution des fréquences de corrélation liées chacune au libre parcours moyen de transport des particules, lui-même fonction de la taille des particules diffusantes de manière à obtenir, pour une concentration et des propriétés optiques du système dispersé connues, une distribution des tailles de particules diffusantes dans le système dispersé. Ainsi, comme mentionné ci-dessus, l'ensemble des valeurs du signal I(t) est échantillonné puis filtré et traité. La transformée de Fourier rapide de la fonction d'auto-corrélation, donne accès à la densité spectrale de puissance. A partir de la densité spectrale de puissance, les fréquences caractéristiques sont reliées au libre parcours moyen de transport fonction de la distribution de taille des particules du milieu. Les principales étapes développées et appliquées afin d'obtenir, à partir des variations temporelles de l'intensité de la lumière rétrodiffusée, une distribution de taille de gouttes d'une phase interne, connaissant la concentration et le gradient de cisaillement auquel le système dispersé est soumis, sont reprises à la figure 5. Ainsi, à partir des données mesurées, on obtient notamment la courbe :

$$I(t) \tag{1}$$

La fonction d'auto-corrélation de l'intensité de la lumière diffusée peut être évaluée par un algorithme conformément à

$$C(t') = \langle I(t)I(t-t') \rangle \tag{2}$$

les symboles entre crochets sont un résumé pour une somme de plusieurs valeurs de t. Par ailleurs, basé sur le développement mathématique de Bicout et al., il est connu que le temps $\tau$ caractéristique de la fonction d'auto-corrélation est donné par la formule :

$$\tau \propto \frac{1}{k_o \lambda^* \Gamma} \tag{3}$$

où $k_o$ correspond au nombre d'onde incident, $\lambda^*$ au libre parcours moyen de transport de photons et r au gradient de vitesse. Si l'on néglige les mouvements Browniens additionnels en considérant que les temps caractéristiques qui sont mesurés sont très faibles comparés à ceux des mouvements Browniens, on peut définir une fréquence telle que suit :

$$\varpi = \frac{1}{\tau} \tag{4}$$

Il doit être noté qu'il est possible de tenir compte des temps caractéristiques Browniens.

A partir de cette définition, on peut donc réécrire la fonction d'auto-corrélation telle que suit :

$$C(t') \int \Omega(\varpi) \exp(-\varpi t') d\varpi \tag{5}$$

où $\Omega \overline{\varpi}$ représente les fréquences de distribution m. Afin d'obtenir cette distribution de fréquence, on applique une transformée de Fourier inverse à la fonction de corrélation $C(t')$. L'information fournie par cette distribution est liée directement au chemin de transport $\lambda^*$ par rapport à l'équation (3).

Ce libre parcours moyen de transport est défini selon Van de Hulst et Ishimaru par l'équation suivante :

$$\lambda^* = \frac{\lambda}{1 - \langle\cos\theta\rangle} \tag{6}$$

où $\theta$ correspond à l'angle de diffusion et $\lambda$ à la distance moyenne entre deux diffusions.

Si l'on connaît la fraction volumique de particules

$$\phi = \frac{N\pi d^3}{6V_{tot}} \tag{7}$$

où d est le diamètre de la particule, N le nombre total de particules, Vtot le volume total de particules. On peut récrire la relation donnant le libre chemin de transport moyen tel que suit :

$$\lambda(d, \phi) = \frac{d}{3} \frac{1}{\phi} \frac{1}{Q_s}$$

où $Q_s$ correspond à l'efficacité de diffusion du système.

Snabre et Arhaliass ont établi par ailleurs que le libre chemin moyen de photon dépend du diamètre de la particule, des propriétés optiques du milieu diffusant (indices de réfraction des particules et du milieu de suspension) et de la fraction volumique $\phi$ de particules. Ainsi, ils ont établi l'équation suivante :

$$\lambda^* = \frac{2d}{3\phi(1-g)Q_s} \tag{8}$$

où g correspond au facteur d'anisotropie du système dispersé à caractériser et $Q_s$ à l'efficacité de diffusion de ce système.

Les paramètres optiques $Q_s$ et g dépendant du diamètre d des particules et des indices de réfraction des phases continue et dispersée sont déterminés par la théorie de Rayleigh ou par la théorie de Mie.

Ainsi, comme l'illustrent les développements ci-dessus, il suffit d'abord de calculer la fonction d'auto-corrélation de la lumière rétrodiffusée et ensuite la transformée de Fourier inverse de la fonction d'auto-corrélation qui donne une distribution de fréquences, chaque fréquence correspondant à la réponse d'une particule de diamètre d par l'équation (8). On obtient ainsi une distribution de taille de particules connaissant la fraction volumique de particules (ou concentration) du milieu dispersé et le gradient de vitesse fourni par l'équation (3). L'analyse de la distribution permet ainsi d'obtenir des paramètres classiques tels que le diamètre moyen, la variance et le diamètre maximum.

Seule la conception du dispositif permet une analyse aussi fine des caractéristiques.

## Revendications

1. Dispositif de mesure en ligne des caractéristiques d'un système dispersé liquide-liquide, tel qu'une émulsion, ou liquide-solide, tel qu'une suspension, contenu dans une installation principale, telle qu'une cuve de mélange ou un circuit de circulation du système dispersé à caractériser, ce dispositif étant constitué d'un circuit (3) apte à être monté en ligne ou en dérivation sur l'installation (1) principale, ce circuit (3) alimentant, à un débit prédéterminé, au moins une chambre (4) de mesure en vue de permettre une mesure en écoulement, ce circuit (3) comportant dans son voisinage au moins des moyens (5, 6, 7, 8) d'émission d'un faisceau laser collimaté frappant en incidence normale la chambre (4) de mesure, des moyens, de type photodiodes (10A), pour la mesure, en temps réel, du signal lumineux rétro diffusé par l'échantillon de système dispersé s'écoulant, au cours de la mesure, dans le circuit, et de conversion de ce signal en un signal électrique,
caractérisé en ce que le dispositif comporte en outre des moyens (9A, 9B, 9C ou 10B) de mesure en ligne, en temps réel, sans prélèvement et sans calibration, de la concentration en particules diffusantes de l'échantillon de système dispersé en écoulement dans le circuit (3) et des moyens (13) d'acquisition et de traitement de données, les moyens (9A, 9B, 9C ou 10B) de mesure en ligne de la concentration et les moyens (10A) de mesure du signal lumineux rétrodiffusé transmettant en parallèle leurs données auxdits moyens (13) d'acquisition, lesdits moyens (13) d'acquisition, étant agencés pour déterminer, à partir des fluctuations dans le temps de l'intensité lumineuse rétrodiffusée par le système dispersé en écoulement dans le circuit (3) et de la concentration en particules diffusantes du système dispersé en écoulement dans le circuit (3), la distribution ou la répartition de tailles des particules diffusantes dans le système dispersé, quelle que soit la concentration en particules de ce dernier.

2. Dispositif selon la revendication 1,
caractérisé en ce que les moyens (9A, 9B, 9C) de mesure en temps réel de la concentration des particules diffusantes de l'échantillon de système dispersé en écoulement dans le circuit (3) sont constitués d'une chambre (9A) ménagée sur le circuit (3), d'une source (9C) de radiation lumineuse disposée à l'extérieur de la chambre (9A) de manière à émettre une radiation lumineuse traversant la chambre et des moyens (9B) de détection de la radiation lumineuse diffusée à travers ladite chambre (9A).

3. Dispositif selon la revendication 2,
caractérisé en ce que les moyens (9B) de détection de la radiation lumineuse, résultant de la radiation lumineuse émise par la source (9C) lumineuse et traversant la chambre (9A) de mesure, sont constitués d'un collecteur de radiation lumineuse formé d'une fenêtre optique à travers laquelle les radiations sont amenées par l'intermédiaire d'au moins une fibre optique à un détecteur linéaire ou matriciel type CCD équipé de moyens de filtrage ou à un photo détecteur.

4. Dispositif selon l'une des revendications 2 et 3,
caractérisé en ce que la source (9C) lumineuse est une diode laser ou une diode électroluminescente.

5. Dispositif selon la revendication 1,
caractérisé en ce que les moyens (10B) de mesure en temps réel de la concentration sont constitués par l'une (10B) des photodiodes de la barrette de photodiodes (10A, 10B) positionnée à l'extérieur de la chambre (4) de mesure du circuit (3), de préférence au voisinage du point d'impact du faisceau laser sur ladite chambre (4), cette photodiode (10B) détectant la zone centrale du flux lumineux rétrodiffusé.

6. Dispositif selon l'une des revendications 1 à 5,
caractérisé en ce que les moyens de type photodiodes (10A) sont agencés pour mesurer le signal issu du faisceau lumineux rétrodiffusé dont l'axe forme avec l'axe du faisceau incident frappant la chambre (4) de mesure, un angle θ compris dans la plage [5° - 45°], de préférence [5° - 10°].

7. Dispositif selon l'une des revendications 1 à 6,
   **caractérisé en ce que** le circuit (3) est équipé d'au moins une pompe (14), telle qu'une pompe péristaltique, disposée exclusivement en aval de la chambre (4) du circuit (3) pour permettre l'alimentation sans perturbation de la chambre (4) de mesure à un débit prédéterminé.

8. Dispositif selon l'une des revendications 1 à 7,
   **caractérisé en ce que** le circuit (3) est monté en ligne ou en dérivation sur un circuit principal de circulation du système dispersé à caractériser et comporte, en amont de la chambre (4) de mesure, au moins un débitmètre et une vanne de régulation de débit commandée en ouverture/fermeture à partir des informations fournies par le débitmètre de manière à garantir une alimentation en système dispersé de la chambre (4) de mesure à un débit constant.

9. Dispositif selon l'une des revendications 1 à 8,
   **caractérisé en ce que** les moyens d'acquisition de données présentent une fréquence d'acquisition réglable sélectionnée par l'opérateur en fonction de l'ordre de grandeur de la taille des particules diffusantes du système dispersé à caractériser, la valeur de la fréquence choisie étant transmise aux moyens de traitement déterminant à partir de ladite valeur, les valeurs de paramètres, tels que le coefficient d'anisotropie et l'efficacité de diffusion, correspondant aux propriétés optiques des particules diffusantes du système dispersé à caractériser.

10. Dispositif selon l'une des revendications 1 à 9,
    **caractérisé en ce que** les moyens de traitement sont agencés pour permettre, à partir du traitement de la courbe I(t) correspondant aux fluctuations de l'intensité lumineuse rétrodiffusée par le milieu dispersé à caractériser en fonction du temps et de la valeur de la concentration en particules diffusantes du système dispersé à caractériser, le calcul de la fonction d'auto-corrélation temporelle C'(t), la transformée de Fourier rapide de cette fonction permettant de déterminer une distribution des fréquences de corrélation liées chacune au libre parcours moyen de transport des particules, lui-même fonction de la taille des particules diffusantes de manière à obtenir, pour une concentration et des propriétés optiques du système dispersé connues, une distribution des tailles de particules diffusantes dans le système dispersé.

11. Procédé de mesure en ligne des caractéristiques d'un système dispersé liquide-liquide, tel qu'une émulsion, ou liquide-solide, tel qu'une suspension, contenu dans une installation (1) principale, telle qu'une cuve de mélange ou un circuit de circulation du système dispersé à caractériser, au moyen d'un dispositif du type constitué d'un circuit (3) apte à être monté en ligne ou en dérivation sur l'installation (1) principale, ce circuit (3) alimentant à un débit prédéterminé au moins une chambre (4) de mesure en vue de permettre une mesure en écoulement, cette chambre de mesure étant frappée en incidence normale par un faisceau laser collimaté,
    **caractérisé en ce qu'**il consiste à mesurer, en ligne, en temps réel et en parallèle, à l'aide de moyens de mesure distincts appropriés, d'une part la concentration en particules diffusantes de l'échantillon de système dispersé circulant dans le circuit (3), d'autre part le signal lumineux rétrodiffusé par l'échantillon de système dispersé circulant dans ledit circuit (3), à convertir ce signal en un signal électrique, à acquérir ces données mesurées suivant une fréquence d'échantillonnage déterminée fonction de l'ordre de grandeur des particules diffusantes du système dispersé à caractériser, puis à traiter lesdites données en vue de déterminer, à partir des fluctuations dans le temps de l'intensité lumineuse rétrodiffusée par le système dispersé et de la concentration en particules diffusantes du système dispersé en écoulement dans le circuit, la distribution ou répartition de taille des particules diffusantes dans le système dispersé, quelle que soit la concentration de ce dernier.

**Patentansprüche**

1. Inline-Messvorrichtung der Merkmale eines Dispersionssystems Füssigkeit-Flüssigkeit wie eine Emulsion oder Flüssigkeit-Feststoff wie eine Suspension, enthalten in einer Haupteinrichtung wie ein Mischtank oder ein Zirkulationskreis des zu beschreibenden Dispersionssystems, wobei diese Vorrichtung von einem Kreis (3) gebildet ist, der imstande ist, inline oder abgezweigt auf der Haupteinrichtung (1) montiert zu sein, wobei dieser Kreis (3) mit einem vorbestimmten Durchsatz mindestens eine Messkammer (4) versorgt, um eine Fließmessung zu erlauben, wobei dieser Kreis (3) in seiner Nachbarschaft mindestens Sendemittel (5, 6, 7, 8) eines kolimatierten Laserstrahls, welcher im Normaleinfall auf die Messkammer (4) trifft, Mittel vom Typ Photodioden (10A) für die Messung in Echtzeit des von der Dispersionssystemprobe, welche während der Messung in dem Kreis fließt, zurückgestreuten Lichtsignals und für die Umwandlung dieses Signals in ein elektrisches Signal aufweist,
**dadurch gekennzeichnet, dass** die Vorrichtung ferner Inline-Messmittel (9A, 9B, 9C oder 10B) in Echtzeit ohne Entnahme und ohne Kalibrierung der Konzentration an diffundierenden Partikeln der im Kreis (3) fließenden Dispersionssystemprobe und Datenerfassungs- und -verarbeitungsmittel (13) aufweist, wobei die Inline-Messmittel (9A, 9B, 9C oder 10B) der Konzentration und die Messmittel (10A) des zurückgestreuten Lichtsignals ihre Daten parallel an die Erfassungsmittel (13) übertragen, wobei die Erfassungsmittel (13) ausgebildet sind, um auf der Basis der Fluktuationen in der Zeit der von dem in dem Kreis (3) fließenden Dispersionssystem zurückgestreuten Lichtintensität und der Konzentration an diffundierenden Partikels des in dem Kreis (3) fließenden Dispersionssystems die Verteilung oder die Größeverteilung der in dem Dispersionssystems diffundierenden Partikel unabhängig von der Partikelkonzentration in diesem zu bestimmen.

2. Vorrichtung nach Anspruch 1,
**dadurch gekennzeichnet, dass** die Messmittel (9A, 9B, 9C) in Echtzeit der Konzentration der diffundierenden Partikel der im Kreis (3) fließenden Dispersionssystemprobe von einer Kammer (9A), die im Kreis (3) ausgebildet ist, von einer Lichtstrahlungsquelle (9C), die außerhalb der Kammer (9A) derart angeordnet ist, dass sie eine Lichtstrahlung sendet, welche die Kammer durchquert, und von Detektionsmitteln (9B) der durch die Kammer (9A) diffundieren Lichtstrahlung gebildet sind.

3. Vorrichtung nach Anspruch 2,
**dadurch gekennzeichnet, dass** die Detektionsmittel (9B) der Lichtstrahlung, resultierend aus der von der Lichtquelle (9C) gesendeten und die Messkammer (9A) durchquerenden Lichtstrahlung, von einem Lichtstrahlungssammler gebildet sind, gebildet von einem optischen Fenster, durch welches die Strahlungen von mindestens einer optischen Faser mit einem Linear- oder Matrixdetektor vom Typ CCD, ausgestattet mit Filtermitteln, oder mit einem Fotodetektor, geführt werden.

4. Vorrichtung nach einem der Ansprüche 2 und 3,
**dadurch gekennzeichnet, dass** die Lichtquelle (9C) eine Laserdiode oder eine elektrolumineszierende Diode ist.

5. Vorrichtung nach Anspruch 1,
**dadurch gekennzeichnet, dass** die Messmittel (10B) in Echtzeit der Konzentration von einer (10B) der Fotodioden der Fotodiodenleiste (10A, 10B) gebildet sind, die außerhalb der Messkammer (4) des Kreises (3), vorzugsweise in der Nähe des Auftreffpunkts des Laserstrahls auf die Kammer (4), positioniert ist, wobei diese Fotodiode (10B) die zentrale Zone des zurückgestreuten Lichtstroms detektiert.

6. Vorrichtung nach einem der Ansprüche 1 bis 5,
**dadurch gekennzeichnet, dass** die Mittel vom Typ Fotodioden (10A) ausgebildet sind, um das vom zurückgestreuten Lichtstrahl ausgehende Signal zu messen, dessen Achse mit der Achse des einfallenden Lichtstrahls, welcher auf die Messkammer (4) trifft, einen Winkel $\theta$ im Bereich [5° - 45°], vorzugsweise [5° - 10°], bildet.

7. Vorrichtung nach einem der Ansprüche 1 bis 6,
**dadurch gekennzeichnet, dass** der Kreis (3) mit mindestens einer Pumpe (14) wie eine peristaltische Pumpe ausgestattet ist, die ausschließlich nach der Kammer (4) des Kreises (3) angeordnet ist, um die störungsfreie Versorgung der Messkammer (4) mit einem vorbestimmten Durchsatz zu erlauben.

8. Vorrichtung nach einem der Ansprüche 1 bis 7,
**dadurch gekennzeichnet, dass** der Kreis (3) inline oder abgezweigt auf einem Hauptzirkulationskreis des zu beschreibenden Dispersionssystems montiert ist und nach der Messkammer (4) mindestens einen Durchflussmesser und ein Durchflussregulierventil aufweist, dessen Öffnung/Schließung auf der Basis von Informationen gesteuert wird, die von dem Durchflussmesser bereitgestellt werden, um eine Versorgung der Messkammer (4) mit Dispersionssystem mit einem konstanten Durchfluss zu garantieren.

9. Vorrichtung nach einem der Ansprüche 1 bis 8,
**dadurch gekennzeichnet, dass** Datenerfassungsmittel eine einstellbare Erfassungsfrequenz aufweisen, die von Bediener in Abhängigkeit von der Größenordnung der Größe der diffundierenden Partikel des zu beschreibenden Dispersionssystems gewählt wird, wobei der gewählte Frequenzwert den Verarbeitungsmitteln übermittelt wird, die auf der Basis dieses Wertes die Werte von Parametern wie Anisotropiekoeffizient und Diffusionseffizienz entsprechend den optischen Eigenschaften der diffundierenden Partikel des zu beschreibenden Dispersionssystems bestimmen.

**10.** Vorrichtung nach einem der Ansprüche 1 bis 9,
**dadurch gekennzeichnet, dass** die Verarbeitungsmittel ausgebildet sind, um auf der Basis der Kurve I(t), die den Fluktuationen der vom in Abhängigkeit von der Zeit und vom Wert der Konzentration an diffundierenden Partikeln des zu beschreibenden Dispersionssystems zu beschreibenden Dispersionsmedium zurückgestreuten Lichtintensität entsprechen, die Berechnung der zeitlichen selbstkorrelierenden Funktion C'(t) zu erlauben, wobei die schnelle FourierTransformation dieser Funktion erlaubt, eine Verteilung der Korrelationsfrequenzen zu bestimmen, die jeweils mit dem freien mittleren Transportweg der Partikel verbunden sind, wobei dieser selbst von der Größe der diffundierenden Partikel abhängt, um für eine Konzentration und bekannte optische Eigenschaften des Dispersionssystems eine Größenverteilung diffundierender Partikel in dem Dispersionssystem zu erhalten.

**11.** Inline-Messverfahren der Merkmale eines Dispersionssystems Füssigkeit-Flüssigkeit wie eine Emulsion oder Flüssigkeit-Feststoff wie eine Suspension, enthalten in einer Haupteinrichtung (1) wie ein Mischtank oder ein Zirkulationskreis des zu beschreibenden Dispersionssystems, mittels einer Vorrichtung des Typs, die von einem Kreis (3) gebildet ist, der imstande ist, inline oder abgezweigt auf der Haupteinrichtung (1) montiert zu sein, wobei dieser Kreis (3) mit einem vorbestimmten Durchsatz mindestens eine Messkammer (4) versorgt, um eine Fließmessung zu erlauben, wobei diese Messkammer von einem kolimatierten Laserstrahl im Normaleinfall getroffen wird,
**dadurch gekennzeichnet, dass** es darin besteht, inline und in Echtzeit und parallel mit Hilfe von bestimmten geeigneten Messmitteln zum einen die Konzentration an diffundierenden Partikeln der in dem Kreis (3) zirkulierenden Dispersionssystemprobe, zum anderen das von der in dem Kreis (3) zirkulierenden Dispersionssystemprobe zurückgestreute Lichtsignal zu messen, dieses Signal in ein elektrisches Signal umzuwandeln, diese Daten, die gemäß einer bestimmten Probenahmefrequenz gemessen wurden, die von der Größenordung der diffundierenden Partikel des zu beschreibenden Dispersionssystems abhängt, zu erfassen, dann die Daten zu verarbeiten, um auf der Basis der Fluktuationen in der Zeit der von dem Dispersionssystem zurückgestreuten Lichtintensität und der Konzentration an diffundierenden Partikeln des in dem Kreis (3) fließenden Dispersionssystems die Verteilung oder die Größeverteilung der in dem Dispersionssystems diffundierenden Partikel unabhängig von der Konzentration in diesem zu bestimmen.

**Claims**

**1.** A device for the online measurement of characteristics of a liquid-liquid dispersed system, such as an emulsion, or a liquid-solid dispersed system, such as a suspension, contained in a main installation, such as a mixing tank or a circulation circuit of the dispersed system to be characterized, this device being made up of a circuit (3) able to be mounted in line or in parallel with the main installation (1), this circuit (3) supplying, at a predetermined flow rate, at least one measuring chamber (4) so as to allow a flow measurement, this circuit (3) including, in its vicinity, at least means (5, 6, 7, 8) for emitting a collimated laser beam hitting the measuring chamber (4) with normal incidence, photodiode-type means (10A) for the real-time measurement of the light signal backscattered by the dispersed system sample flowing, during the measurement, in the circuit, and converting this signal into an electric signal, **characterized in that** the device further includes means (9A, 9B, 9C or 10B) for real-time online measurement, without withdrawal and without calibration, of the concentration of diffusing particles of the dispersed system sample flowing in the circuit (3) and data acquisition and processing means (13), the means (9A, 9B, 9C or 10B) for online concentration measurement and the means (10A) for measuring the backscattered light signal transmitting their data in parallel to said acquisition means (13), said acquisition means (13), being arranged to determine, from fluctuations over time of the light intensity backscattered by the dispersed system flowing in the circuit (3) and the concentration of diffusing particles of the dispersed system flowing in the circuit (3), the size distribution or spread of the diffusing particles in the dispersed system, irrespective of the particle concentration of the latter.

**2.** The device according to claim 1,
**characterized in that** the means (9A, 9B, 9C) for real-time measurement of the concentration of diffusing particles of the dispersed system sample flowing in the circuit (3) are made up of a chamber (9A) arranged on the circuit (3), a source (9C) of light radiation positioned outside the chamber (9A) so as to emit light radiation traversing the chamber, and means (9B) for detecting the light radiation diffused through said chamber (9A).

**3.** The device according to claim 2,
**characterized in that** the means (9B) for detecting light radiation, resulting from the light radiation emitted by the light source (9C) traversing the measuring chamber (9A), are made up of a light radiation collector formed by an optical window through which the rays are brought via at least one optical fiber to a CCD-type linear or matrix detector equipped with filtering means or to a photodetector.

4. The device according to one of claims 2 and 3,
   **characterized in that** the light source (9C) is a laser diode or a light-emitting diode.

5. The device according to claim 1,
   **characterized in that** the means (10B) for real-time measurement of the concentration are made up of one (10B) of the photodiodes of the strip of photodiodes (10A, 10B) positioned outside the measuring chamber (4) of the circuit (3), preferably near the impact point of the laser beam on said chamber (4), this photodiode (10B) detecting the central zone of the backscattered luminous flux.

6. The device according to one of claims 1 to 5,
   **characterized in that** the photodiode-type means (10A) are arranged to measure the signal from the backscattered light beam, the axis of which forms, with the axis of the incident beam striking the measuring chamber (4), an angle θ comprised in the range [5° - 45°], preferably [5° - 10°].

7. The device according to one of claims 1 to 6,
   **characterized in that** the circuit (3) is equipped with at least one pump (14), such as a peristaltic pump, positioned exclusively downstream from the chamber (4) of the circuit (3) to allow the undisrupted supply of the measuring chamber (4) at a predetermined flow rate.

8. The device according to one of claims 1 to 7,
   **characterized in that** the circuit (3) is mounted in line or in parallel with a main circulation circuit of the dispersed system to be characterized and includes, upstream from the measuring chamber (4), at least one flow meter and a flow regulating valve, the opening/closing of which is commanded from information supplied by the flowmeter so as to guarantee that the measuring chamber (4) is supplied with dispersed system at a constant flow rate.

9. The device according to one of claims 1 to 8,
   **characterized in that** the data acquisition means have an adjustable acquisition frequency selected by the operator based on the order of magnitude of the size of the diffusing particles of the dispersed system to be characterized, the value of the chosen frequency being sent to the processing means determining, from said value, the values of parameters, such as the anisotropy coefficient and the diffusion efficiency, corresponding to the optical properties of the diffusing particles of the dispersed system to be characterized.

10. The device according to one of claims 1 to 9,
    **characterized in that** the processing means are arranged to allow, from the processing of the curve I(t) corresponding to the fluctuations of the light intensity backscattered by the dispersed medium to be characterized as a function of time and the value of the concentration of diffusing particles of the dispersed system to be characterized, the calculation of the time autocorrelation function C'(t), the fast Fourier transform of this function making it possible to determine the distribution of the correlation frequencies each related to the free mean transport journey of the particles, which in turn depends on the size of the diffusing particles, so as to obtain, for a known concentration and known optical properties of the dispersed system, a distribution of the diffusing particle sizes in the dispersed system.

11. A method for the online measurement of characteristics of a liquid-liquid dispersed system, such as an emulsion, or a liquid-solid dispersed system, such as a suspension, contained in a main installation (1), such as a mixing tank or a circulation circuit of the dispersed system to be characterized, using a device of the type made up of a circuit (3) able to be mounted in line or in parallel with the main installation (1), this circuit (3) supplying, at a predetermined flow rate, at least one measuring chamber (4) so as to allow a flow measurement, this measuring chamber being hit with normal incidence by a collimated laser beam,
    **characterized in that** it consists of measuring, online, in real time and in parallel, using appropriate separate measuring means, on the one hand, the concentration of diffusing particles of the dispersed system sample circulating in the circuit (3), on the other hand the light signal backscattered by the dispersed system sample circulating in said circuit (3), converting the signal into an electrical signal, acquiring these measured data according to a determined sampling frequency depending on the order of magnitude of the diffusing particles of the dispersed system to be characterized, then processing said data in order to determine, from fluctuations over time of the light intensity backscattered by the dispersed system and the concentration of diffusing particles of the dispersed system flowing in the circuit, the size distribution or the spread of the diffusing particles in the dispersed system, irrespective of the concentration of the latter.

## FIGURE 1

## FIGURE 2

## FIGURE 3

## FIGURE 4

Diamètre des particules (µm)

FIGURE 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5012119 A
- DE 10001701
- DE 19910698